# EUROPEAN PATENT APPLICATION

(11) **EP 3 758 183 A1**
(43) Date of publication of application: **30.12.2020**
(21) Application number: 19181936.6
(22) Date of filing: 24.06.2019
(51) Int. Cl.: H02J 7/00

(54) **BATTERY MANAGEMENT SYSTEM FOR PARALLEL CHARGING OF BATTERY MODULES**

(71) Applicant: Nilfisk A/S, 2605 Brøndby (DK)
(72) Inventor: Thorsøe, Jan, DK-9230 Svenstrup (DK)
(74) Representative: Plougmann Vingtoft a/s

(57) **Abstract**

The invention relates to a battery system (100) which includes a master controller (101) arranged to determine a current control signal (151) for controlling a charging current from a current source (102), one or more battery modules (103) comprising battery module terminals (122), a connection arrangement arranged to electrically connect the one or more battery modules in parallel via the battery module terminals to enable parallel charging/discharging via individual switches (104), where each battery module comprises at least one battery cell (105), and a slave control unit (106) configured to monitor a battery condition of the battery module and to determine a battery event based on the battery condition, where the master controller is configured to determine the current control signal dependent on the battery event from any of the battery modules so as to cause a reduction or increase of the charging current, and to determine the current control signal dependent on battery module capacities of the one or more battery modules.

## Description

### FIELD OF THE INVENTION

The invention relates to battery charging systems, particularly to battery charging systems for automatic charging of multiple battery modules arranged in a battery system.

### BACKGROUND OF THE INVENTION

Battery powered machines like floor-cleaning machines may comprise a battery system which can include one or more battery modules . In some situations, where two or more battery modules are included in the battery system, the battery modules may have different performance characteristics. The different performance characteristics may be due to different cell capacity, different charge cut-off, different impedance, different cell technology, different age and other.

Efficient charging of such battery modules having different performance characteristics may be a challenge. Particularly, fast, reliable and safe charging of such battery modules may not be achievable with existing battery management systems.

EP 2 575 235B1 discloses a system for controlling the charging and discharging of one or more battery packs or battery modules connected to a power source or an apparatus driven by the battery packs. Each battery pack comprises a number of battery cells connected to two or more terminals for establishing an electrical connection with the power source or the apparatus. The electronic system for controlling the charging of the battery pack and the electronic system for controlling the operation of the apparatus are integrated into the battery pack (8). The battery pack comprises a communications interface for communicating with other battery packs and generates a charging and discharging pool, where the most effective battery pack to charge or discharge is charged or discharged first.

Thus, EP 2 575 235B1 discloses a system where the battery modules are charged or discharged one by one.

### SUMMARY

It is an object of the invention to improve battery charging systems to alleviate one or more of the above mentioned problems, and therefore to provide a battery management system capable of providing fast but still reliable and safe charging of a battery system which may consist of battery modules with different battery characteristics.

In a first aspect of the invention there is provided a battery module comprising
- at least one battery cell,
- a battery module terminal arranged to detachably connect with a connection arrangement, where the connection arrangement is arranged to electrically connect a plurality of the battery modules in parallel to enable parallel charging/discharging via individual switches,
- a master controller arranged to determine a current control signal for controlling and adjusting a charging current from a current source,
- a slave control unit configured to monitor a battery condition of the battery module, where the slave control unit and/or the master controller is arranged to determine a battery event based on the battery condition, where the master controller is configured to
- determine the current control signal dependent on the battery event so as to cause a reduction or increase of the charging current, and to determine the current control signal dependent on battery module capacities of the one or more battery modules being connected to the current source via the individual switches.

When two or more battery modules are connected in parallel via the battery system connector, each slave control unit of the battery modules are capable of generating battery conditions which could generate a battery event. Since the current control signal is determined based the battery event from any battery module, the reduction of the current is adapted dependent on any of the parallel charged or discharged battery module. Advantageously, the adjustment of the charging current supplied to the parallel connected battery modules dependent on battery events from any of the battery modules will optimize charge performance of each module.

Advantageously, since the battery modules are charged in parallel, with a suitable charging power, it may be possible to improve the charging speed compared with a system where battery modules are charged sequentially one by one, due to the limited maximal charging current of a single battery module. The improved charging speed may be achieved while reliability and safety is maintained since the charging current is adjustable and dependent on any battery event.

While the decrease of the charging current is dependent on the battery event, increases may be independent on the battery event but dependent on other conditions such as dependent on a timer signal or dependent on an allowed time condition. Alternatively, the master controller may be configured to determine the current control signal dependent on the battery event so as to cause an increase of the charging current. For example, changes in the battery module temperature could generate a temperature based battery event which could allow an increase of the charging current

Increase or decrease of the charging current may comprise corresponding changes in the charging current dependent on predetermined changes or changes which are determined according to predetermined rules. The adjustments may be performed according to predetermined times where current adjustments are allowed.

The battery condition may comprise a battery module temperature, a cell voltage of the at least one battery cell, a battery module voltage measured over the at least one battery cell, a battery module charging current flowing into one of the battery modules and/or a comparison result of the battery module charging current or the charging current, or derivatives thereof, with a current threshold. For example, a derivative of the module charging current or the charging current in the form of a time average may be compared with a current threshold for accessing a fully charged condition of the battery module.

The battery event may be determined in response to one or more of:
- determining a maximum cell voltage event when the cell voltage has reached a maximum voltage,
- determining a fully charged battery module event indicating that the battery module is fully charged, and
- determining a maximum battery module charging current event when the battery module charging current exceeds a maximum current.

Another battery event may be determined in response of determining that the battery module voltage is below a given voltage limit, is within a given voltage range or is the smallest battery module voltage among other battery modules voltage. This battery event may be used during an initial charging process where battery modules may be charged individually or in groups dependent on the battery module voltages in order to equalize battery module voltages among the connected battery modules. For example, the battery modules with the lowest module voltage is connected to the charger first. The other modules, i.e. the battery modules which are not connected to begin with, are connected in parallel with the first-connected modules automatically when the modules voltages of the initially connected modules reach the voltage level of modules with higher module voltages.

According to an embodiment a magnitude of the reduction or the increase of the charging current is determined dependent on the battery module capacities of said one or more battery modules. Advantageously, the magnitude of the charging current is adapted dependent the remaining capacity of the parallel connected battery modules so that the charging current matches the allowed total charging current of the still not fully charged battery modules.

According to an embodiment, the master controller is configured to determine the current control signal so as to cause and possibly continue the increase of the charging current only in the absence of the battery event. Advantageously, the battery events, which require a reduction of the charging current may be prioritized over current increases. This may prevent too high charging currents. Thus, according to this embodiment, the system may be configured so that only current decreases are determined dependent on battery events, while current increases may be dependent on other conditions.

According to an embodiment, the master controller is configured to determine the current control signal dependent on a timer signal so that changes of the current control signal is only possible at times given by the timer signal. Advantageously, both increases and decreases in the charging current, are only possible at allowed times or allowed periods of time, so that decreases in the charging current can prioritized over charging current increases

According to an embodiment, the slave controller is configured to determine a fully charged condition of one of the battery modules dependent on a comparison of the charging current with a current threshold or to determine the fully charged condition when all cell voltages of the battery module has reached a maximum voltage.

According to an embodiment the battery module comprises one of the switches. Advantageously, the switches are comprised by the battery modules, i.e. so that each battery module houses a switch. In case the switches were arranged externally to the battery modules, the switches would have to be dimensioned according to a worst-case scenario of the possible different types (e.g. with different load characteristics) of battery modules that are allowed to be connected, e.g. so that the switches are dimensioned to a maximum charge and discharging current of the battery modules which are allowed to be connected to the connection arrangement.

In case of internal switches, the internal switch in each battery module need only be dimensioned to fit the maximum charge and discharge current of the module.

According to an embodiment, the switch is controllable to connect or disconnect the battery module from the current source or a load. Advantageously, the switch may be controllable via control signals from the master controller and/or the slave control unit.

A second aspect of the invention relates to a battery system comprising
- a master controller arranged to determine a current control signal for controlling and adjusting a charging current from a current source (102),
- one or more battery modules (103) comprising battery module terminals (122),
- a connection arrangement (121) arranged to electrically connect the one or more battery modules (103) in parallel via the battery module terminals (122) to enable parallel charging/discharging via individual switches (104), where each battery module comprises
   - at least one battery cell,
   - a slave control unit configured to monitor a battery condition of the battery module and to determine a battery event based on the battery condition, where the master controller is configured to
- determine the current control signal dependent on the battery event from any of the battery modules so as to cause a reduction or increase of the charging current, and to determine the current control signal dependent on battery module capacities of the one or more battery modules being connected to the current source or via the individual switches.

According to an embodiment, each of the battery modules comprises a digital processor which is configurable to operate as the master controller. Advantageously, the processor used for operating the slave control units may also operate the master controller.

According to an embodiment, the configuration to operate as the master controller is determined dependent on individual data stored by each of the battery modules.

According to an embodiment, the battery system comprises a register which stores identification data obtained from each of the battery modules and wherein the master controller is configured to store charging data in the register indicating a fully charged and/or discharge condition of the battery modules.

According to an embodiment, the battery system comprises a communication function, such as a CAN bus, arranged to communicate information, such as the battery event, battery identification or status, from the slave control unit to the master controller and to communicate the current control signal to the current source.

According to an embodiment, the master controller is configured to request battery modules individually to connect to the current source dependent on battery module voltages obtained from the one or more battery modules, where the battery module voltage is a voltage over the series connected battery cells. Advantageously, by selectively charging one or more battery modules dependent on their battery module voltages, the battery module voltages of all battery modules can be equalized before all battery modules are electrically connected in parallel. For example, during an initial charging process where battery modules may be charged individually or in groups dependent on the battery module voltages in order to equalize battery module voltages among the connected battery modules. For example, the battery modules with the lowest module voltage is connected to the charger first. The other modules, i.e. the battery modules which are not connected to begin with, are connected in parallel with the first-connected modules automatically when the modules voltages of the initially connected modules reach the voltage level of modules with higher module voltages.

A third aspect of the invention relates to a battery powered apparatus, such as a floor cleaning machine, comprising the battery system of the second aspect and a load, such as an electrical motor drive, where the apparatus including the load is arranged to be powered by the battery system.

A fourth aspect of the invention relates to a battery-charger system comprising the battery system of the second aspect and the current source.

A further aspect of the invention relates to a method for charging a battery system, where the battery system comprises
- a master controller arranged to determine a current control signal for controlling and adjusting a charging current from a current source,
- one or more battery modules comprising battery module terminals,
- a connection arrangement arranged to electrically connect the one or more battery modules in parallel via the battery module terminals to enable parallel charging/discharging via individual switches, where each battery module comprises
   - at least one battery cell,
   - a slave control unit configured to monitor a battery condition of the battery module and to determine a battery event based on the battery condition, where method comprises:
- determining the current control signal dependent on the battery event from any of the battery modules so as to cause a reduction or increase of the charging current, and
- determining the current control signal dependent on battery module capacities of the one or more battery modules being connected to the current source or via the individual switches.

In general, the various aspects and embodiments of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 shows a battery-charger system comprising a battery system,
Fig. 2A shows the maximal charging current of a battery module as a function of temperature,
Fig. 2B shows voltage and current as a function of time in a charging process,
Fig. 3 shows an example of an event-controlled charging process with two battery modules, and
Fig. 4 provides an overview of some battery events.

### DESCRIPTION OF EMBODIMENTS

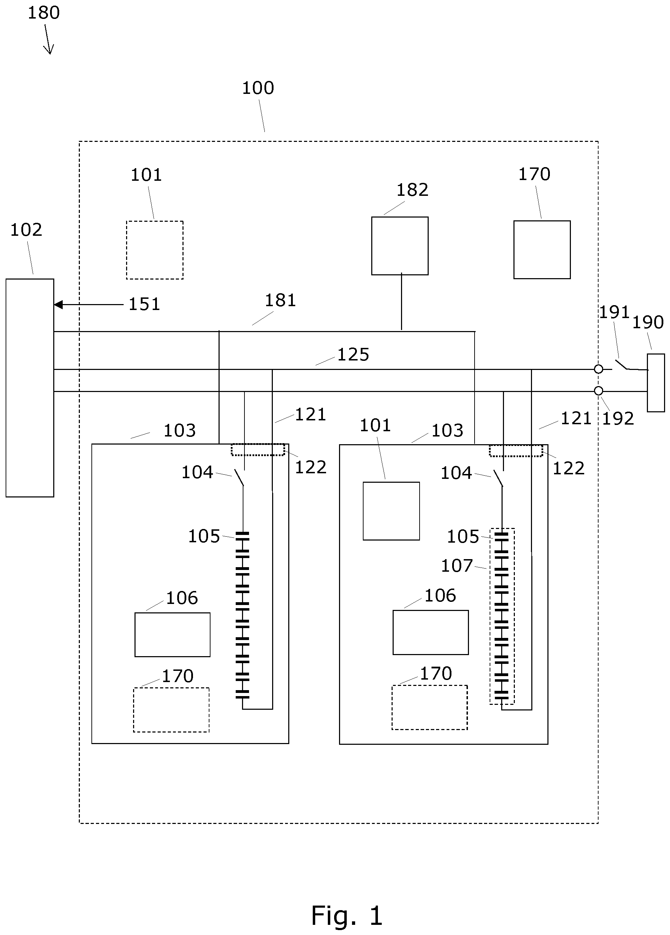

Fig. 1 shows a battery-charger system 180 comprising a battery system 100 and a current source 102 arranged to supply a charging current to one or more battery modules 103 of the battery system 100. The current source 102 is controllable to adjust the charging current dependent on the current control signal 151 from a master controller 101.

Each battery module 103 comprises one or more battery cells 105 which are arranged in series. The connected battery cells 105 of a battery module constitutes a core-pack 107.

A function of the master controller 101, which is comprised by the battery system 100, is to determine the current control signal 151, which could be implemented in the communication bus 181, for controlling and adjusting a charging current from the current source. The current control signal 151 may be a digital or analogue control signal. For example, the current control signal 151 may be in format which is compatible with a communication bus format such as a CAN bus format. The current control signal may contain information, e.g. a digital or analogue value, which directly specifies the desired charging current, or the current control signal may indirectly specify the desired charging current, e.g. by specifying a change in the charging current or by including information which is translated by the current source, e.g. via a predetermined look-up table, into the desired charging current.

The current source 102 may be an electronically controllable power supply which can deliver a DC current according to the current control signal 151. The voltage amplitude at the output of the current source 102 may be controlled to a desired voltage level, e.g. a constant or substantially constant voltage. The current may be controllable e.g. in a range from zero or substantially zero to 735 A, such as up to 1000 A, for a system with up to 25 battery modules.

The battery system 100 comprises a connection arrangement 121, principally illustrated in Fig. 1, arranged to establish electrical connection with battery module terminals 122 of the battery modules so that the input/output current terminals of the battery modules 103 are parallel connected with the current supply terminals of the current source 102.

In addition to the electrical connectors, the connection arrangement 121 may comprise mechanical structures such as guides to ensure that battery modules are not connected with reverse polarity. Other mechanical connections of the battery modules are possible such as bolted connections.

The parallel connection between the battery modules may be established via a power bus 125 which connects all connection arrangements 121 in parallel with the current source 102 and with the load 190 or the load terminals 192 of the battery system 100.

In an example the battery module terminals 122 may be connection terminals such as threaded terminals which are detachably connectable with corresponding connection terminals of the connection arrangement 121. The connection arrangement 121 may comprises connection wires which establish the electrical connection from the current source 102 to the first battery module, from the first battery module to the second battery module, etc. For example, the connection arrangement 121 may comprise a plurality of connection wires, where each of them connect one terminal for the first battery module to a terminal of the second battery module. Other connection wires connect from the output terminals of the current source to the terminals of the first battery module. In this example, the power bus 125 comprises the connection wires arranged between the battery modules and the current source.

In another example, the battery modules 103 are arranged to be detachably connected with the connection arrangement 121 via the battery module terminals 122. For example, the connection arrangement 121 may comprise an electrical rail system to which the battery module terminals are connectable.

Individually controllable switches 104 are provided in the electrical connection between the current source 102 and the battery cells 105 in order to disconnect/ connect the battery cells 105 from/to the current source 102 or the load unit 190.

The load 190 may be any electrical consumer of a battery powered apparatus such as floor cleaning device. The load 190 may be connected/disconnected from the battery system 100 via an optional switch 191. For example, the load 190 may comprise electric motors, pumps, etc. of the battery powered apparatus.

The battery system 100 may comprise a communication bus 181 configured according to standards such CAN, I2C, SPI, RS232 or other. The communication bus connects the current source 102 and the battery modules to enable transmission of control signals, such as the current control signal 151, and other signals such as battery event signals.

The communication bus 181 may further comprise a battery mode control function 182 arranged to activate the battery modules from a powered down mode where switches 104 are open to a powered mode where switches 104 are closed. The battery mode control function 182 or other control function of the communication bus 181, may further be arranged to control the optional switch 191 to open when a charging process is initiated, and to close when the load 190 of the battery powered apparatus is to be powered by the battery modules.

The individually controllable switches 104 may be comprised by the battery modules 103 so that each battery module comprises a controllable switch 104. Alternatively, the switches 104 may be externally located switches, i.e. arranged in series with the electrical connection between each battery module 103 and the current source 102 to individually connect/disconnect the battery modules to/from the current source 102.

Due to the parallel connected battery modules 103, the battery modules which are connected via switches 104 can be charged or discharged in parallel.

Each of the battery modules comprises at least one battery cell such as Nickelcadmium battery cells, Lithium-ion battery cells, nickel metal hydride battery cells. The battery cells may be series connected to establish a sufficiently high voltage.

The battery modules may be configured with active or passive balancing such as a balancing circuit (not shown), which can be switched in, in parallel with each battery cell, when the battery cell reaches a fully charged level such as a predetermined voltage level or charge status. The purpose of the balancing circuit is to keep the individual battery cells in balance.

Each of the battery module comprises a slave control unit 106 configured to monitor a battery condition of the battery module. Examples of battery conditions includes cell voltages of individual battery cells 105, battery module voltages across all battery cells of a battery module, module charging currents flowing into individual battery modules 103, battery module capacities and temperatures of the modules under charge and discharge.

Both the slave control unit 106 and the master controller 101 may be configured to control the switches 104.

The slave control unit 106 is further arranged to determine battery events based on the battery condition.

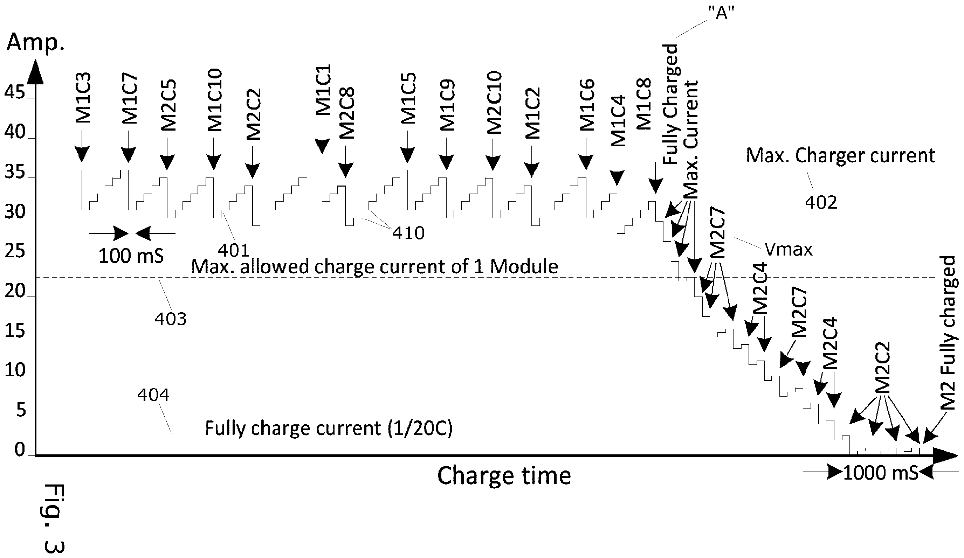

Battery events comprises voltage events of the battery cells which are generated by the slave control unit 106 when individual cell voltages reaches a voltage threshold, Vmax, which is reached when the cell is considered fully charged. When all battery cells 105 of a battery module 103 have reached Vmax, the battery module is considered fully charged, and a "Fully Charged" battery event Mchar is generated. The fully charged condition may further be conditioned in that the charge current to the module is below a predetermined level. A battery module may be considered fully charged in other situations, as described in connection with Fig. 3, where a "Fully Charged" battery event is similarly generated. Thus, such battery events may be used to signal that a battery cell 105 and/or a battery module 103 is fully charged.

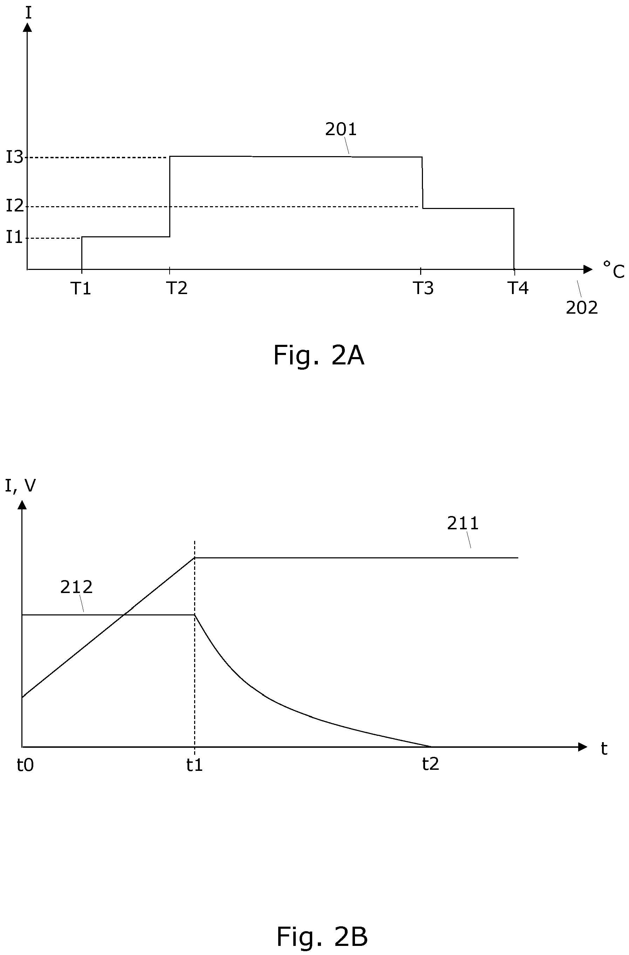

Other battery events may be generated dependent on battery module temperatures. As shown in Fig. 2A, the maximal charging current 201 of a battery module 103 depends on the battery module temperature 202. For example, as illustrated, maximal charging currents I1, I2 and I3 apply for temperatures in the temperature intervals T1-T2, T2-T3 and T3-T4, respectively. Accordingly, a battery event may be generated when the temperature is within the ranges T1-T2 and T3-T4, in order to set a maximal charging current according to the temperature, or to disconnect the battery module from the power bus 125 if the temperature is outside the allowed temperature range, e.g. if the temperature is above T4 or below T1.

The battery events may be determined by the slave control unit, although some battery events may be determined by the master controller based on information from one or more of the slave control units.

If a slave control unit 106 detects that a temperature of its battery cells 105 are above a maximum temperature, such as 50 degrees, the slave control unit may disconnect the battery module from the power bus 125 to avoid damages. The slave control unit may further send a "high-temperature" message to the master controller 101 which send switch control signals to other battery modules so as to disconnect these battery modules from the power bus.

Other battery events may be generated when the module charging current exceeds a maximum current, e.g. if the module charging current exceeds the maximal charging current 201 as specified for a given temperature range of the battery module temperature 202.

In general a battery event may be generated by the slave control unit from any of the battery modules in order to generate a current control signal which controls the current source 102 to decrease the charging current. In other situations, a battery event may be generated by the master controller 101 based on information from the slave control units 106.

The slave control unit 106 may be implemented as software code designed to carry out the functions of the slave control unit and to be executed by a digital processor comprised each of the battery modules 103.

In general, a single master controller 101 is needed by the battery system 100. Each of the battery modules 103 may be configured to establish the master controller. For example, the master controller 101 may be implemented as software code designed to carry out the functions of the master controller 101 unit and to be executed by a digital processor comprised each of the battery modules 103, such as the digital processor which runs the slave control unit 106.

Alternatively, the battery system 100 such as a housing of the battery system 100 may comprise a digital processor or other electronic circuit configured to embody the master controller 101, e.g. via a digital processor arranged to run software code designed to carry out the functions of the master controller 101.

In case the master control unit 101 is comprised by one of the battery modules 103, the configuration of the battery module 101 to operate as the master controller may be determined dependent on individual data stored by each of the battery modules 103. Such individual data may include a date, such as the production date, of the battery module 103, fault conditions stored by the module, a serial number of the battery module, the actual charging capacity, number of charge/discharge cycles and other charging data of the battery module. In this way, a single battery module can always be pointed out to be responsible to carry out the master controller function.

The battery system 100 may further comprise a register 170, e.g. a digital memory, which stores identification data obtained from each of the battery modules. For example, the master controller 101 may be configured to store charging data in the register 170 indicating which of the battery modules has reached the fully charged battery module condition/event Mchar, a fully discharged battery module condition Mdis and other conditions such as over- and under-temperature conditions and defect conditions. A common register 170 may be comprised by the battery system which is accessible for reading and writing by the master controller 103. Alternatively, one or any of the battery modules may have the register 170 implemented in a memory of the battery module. Advantageously, if a battery module 103 is configured to implement the master controller 101, that battery module may additionally implement the register 170.

The battery system 100 may be configured with a communication function arranged to communicate information from the slave control units 106 to the master controller 101, such as battery event information, from the master controller 101 to the slave control units 106, such as switch control signals to operate the switches 104, and from the master controller to the current source 102, such as the current control signal 151.

Fig. 2B shows a charging process where curve 211 is the voltage across the power bus 125, i.e. substantially the voltage across the series connected battery cells, and where curve 212 is the current supplied by the current source 102. The time from t0 to t1 is an initial charging period where the current 212 is constant or substantially constant and where the voltage increases from an initial voltage at t0 to a maximum voltage at t1. The time from t1 to t2 is the final charging process which is described in detail in connection with Fig. 3.

The initial charging period may start with determining which of the battery modules 103 should be configured to operate as the master controller 101, in case two or more of the battery modules are configurable to operate as master controller.

The master controller may update the register 170 with data from the battery modules, such as serial number or other identification data of the battery modules, the nominal capacities, defect condition data indicating if a module is defect, over- and under-temperature conditions in case any of the battery modules 101 - or any of the modules which are not fully charged or defect - satisfies such over- and under-temperature conditions (cf. Fig. 2A), and charging data indicating if a battery module is fully charge or fully discharged.

The master controller may determine that all battery modules are disconnected from the power bus 125, if any of the battery modules has an over- and under-temperature condition.

The master controller may be set to a wait state, waiting for a "ready message" from the slave control unit 106 of the battery module affected by the over- and under-temperature condition, so that charging can be continued when the temperature returns to the allowed temperature range.

The master controller may be configured to obtain battery module voltages from each of the battery modules or any of the modules which are not fully charged or defect. The battery module voltage is the voltage measured over all battery cells of a battery module, i.e. over the core-pack 107. In order to equalize battery module voltages among the battery modules, the master controller may be configured to request that the one or more battery modules having the lowest battery module voltages, or having battery module voltages below a certain minimum voltage limit, to connect to the power bus 125 via the switches 104. The connection request may be a in the form of a connection request signal which may include identification data of the battery modules which should connect, where the connection request signal may be transmitted via the communication bus 181.

The connection request may directly control the switches to connect/disconnect, or the slave control unit 106 of the relevant battery modules may control the switches dependent on the connection request.

Accordingly, the master controller may be configured to request battery modules individually to connect to the power bus 125 dependent on battery module voltages obtained from one or more the battery modules.

Fig. 3 shows an example of an event-controlled charging process and how the current control signal is determined dependent on the battery event so as to cause a reduction or increase of the charging current. The abscissa axis shows the charging time and the ordinate axis shows the charging current in amperes.

The Fig. 3 example is based on charging two battery modules 103 with a 1200 Watt current source 102 after the initial charging process. The current source 102 has a maximum output current, here a maximum of 36 Ampere, and is indicated by line 402. Each of the battery modules has a nominal capacity of 44800 mAh.

The first battery module 103 is named M1 and the ten battery cells of battery module M1 are named M1C1 - M1C10. The second battery module 103 is named M2 and the ten battery cells of battery module M2 are named M2C1 - M2C10.

Line 403 indicates the maximal charging current 201 of each of the battery modules M1, M2 for a normal temperature range, e.g. in the range from 10 to 40 degrees Celsius.

Curve 401 is the charging current supplied by the current source 102. Since the charging current is generated in response to the current control signal, the current control signal could be represented by curve 401, particularly when the current control signal is proportional with the desired charging current.

The master controller is configured to determine the current control signal dependent on a timer signal so that changes of the current control signal is only possible at times given by the timer signal.

Curve 404 is a fully charged current level which defines when a given battery module is considered fully charged. That is, when the charging current for a given battery module 103 decreases below the fully charged current level 404, when the charging current has been below the current level 404 for a period of time or when a time-average of the charging current obtained over a period of time is below the current level 404, the battery module can be considered fully charged. The fully charged current level 404 may be determined as a fraction of the battery module capacity, such as 1/20 of the battery capacity, e.g. the battery capacity specified by the manufacture's datasheet.

In this example, the master controller 101 only determines the current control signal or changes in the current control signal at specific times, here every 100 ms. Therefore, changes in the charging current 401 is only allowed after the lapse of a certain time interval such as the 100 ms time interval. The specific times or allowed times where a change of the current control signal or charging current is allowed, may include a certain tolerance time interval wherein the current control signal or the charging current is allowed to be determined, e.g. in response to a battery event. These allowed times or allowed time intervals are indicated with reference 410.

Accordingly, any battery event from any of the battery modules generated between the specific times, i.e. within the time intervals such as the 100 ms time intervals, may be disregarded.

That is, only battery events, such as only one battery event, from any of the battery modules is accepted when the event occurs at the specific times, i.e. allowed times, or within the tolerance time interval of the allowed times.

The master controller may be configured to only read the battery event when a timer signal signals an allowed time. The battery event could be transmitted as a battery event signal transmitted via the communication bus 181 such as the aforementioned CAN bus and prioritized over other signals on the bus to avoid delays. Accordingly, the master controller 101 is configured to determine the current control signal dependent on the timer signal so that changes of the current control signal is only possible at times given by the timer signal.

The charging current 401 at zero point of charging time, i.e. the point at the crossing between the coordinate axes, is the charging current as obtained after the initial charging process in Fig. 2B, i.e. after t1 in Fig. 2B when charge process is changed from constant current to constant voltage 211. Thus, the curve 401 represents a constant voltage phase.

A first battery event happens because the 3rd battery cell 105, M1C3 of module M1 reach the voltage threshold Vmax because M1C3 has become fully charged. The slave control unit 106 of battery module M1 sets the balancing resistor on the 3rd battery cell and sends the Vmax battery event, e.g. via a communication bus.

On basis of the Vmax battery event, which is received by the master controller 101, the master controller determines the current control signal to cause a reduction the charging current due to the decrease of the required charging current. The current control signal causes a decrease of the charging current 401.

The magnitude of the decrease or increase of the charging current 401 may be determined based on predetermined rules. For example, the decrease or increase of the charging current 401 may be determined dependent on battery module capacities of the battery modules which is currently being charged, i.e. capacities of battery modules which are not being charged, e.g. since they have reached a fully charged state, are disregarded.

In the example in Fig. 3, the decrease and increase is determined as predetermined percentages of the actual battery capacities, here the decrease of the charging current is given as 5% of the total actual battery capacity and the increase of charging current is 1% of the battery capacity. The battery module capacities may be the nominal battery module capacities or other measure of the battery module capacity.

The determined current control signal is read by the current source 102 which reduces the charging current 401 according to the current control signal. The current control signal may specify the absolute current value or a relative change. In case the current source 102 is configured to determine the charging current on basis of the battery module capacities and e.g. a predetermined percentage change, the current control signal could simply indicate a desired increase or decrease of the charging current 401.

Since each of the battery modules has a nominal capacity of 44800 mAh, the charging current is reduced by to 4.48 A, corresponding to 5% of the total capacity of 2 x 44800 mAh.

In the Fig. 3 example, the master controller 101 generates the current control signal so as to cause an increase of the charging current automatically every 100 ms, in general after a certain time interval has lapsed, e.g. dependent on the timer signal. Thus, the master controller 101 automatically sends an "increase" current instruction to the charger periodically at specific times, such as every 100 ms.

The charge current is increased by e.g. 1% of the nominal capacity of the connected modules M1 and M2, equal to 0.896 Ampere, corresponding to 1% of the total capacity of 2 x 44800 mAh.

Since a reduction in the charging current may be important in order to avoid too high charging current which could damage a battery module 103, battery events which would cause a reduction in the charging current may be prioritized over the aforementioned automatic increases of the charging current 401. Thus, in case the master controller 101 at the same time, e.g. at the same "allowed time", would generate both an automatic increase of the charging current and also receives a battery event for decreasing the charging current 401, the battery event for decreasing the charging current would be prioritized over the automatic increase of the charging current.

Thus, the master controller may be configured to determine the current control signal 151 so as to cause the increase of the charging current, e.g. an automatic increase of the charging current, only in the absence of any battery event for decreasing the charging current.

A second battery event happens when the M1C7 battery cell reaches Vmax. The slave control unit 106 in module 1 sets the balancing resistor on the 7th cell and the slave control unit sends a battery event signal Vmax.

The different or distinguishable battery event signals may be generated for different kinds of battery events, i.e. a specific and distinguishable battery event may be generated by the slave control units 106 when a battery cell voltage reaches the fully charged cell-voltage Vmax. Alternatively, the same, i.e. a common battery event signal, may be generated for different kinds of battery events. The latter alternative is feasibly when different battery events should generate the same reduction of the charging current, e.g. the same percentage reduction dependent on the battery capacity.

The generation of battery events due to battery cells reaching Vmax is continued and the balancing resistors are been set on several cells in both battery modules M1 and M2.

A new type of a battery event is generated after all battery cells of a battery module 103 have reached the voltage threshold Vmax. In Fig. 3, the last battery cell M1C8 of battery module 1 is fully charged at the instance indicated with letter A. Since this is the last battery cell which reaches Vmax, a fully charged battery module event Mchar is generated.

The fully charged battery module event Mchar may be generated by the slave control unit 106 of the battery module which has become fully charged, or by the master controller 103 in response to receiving a "fully charged" message from the slave control unit 106.

In addition to sending the fully charged battery module event Mchar to the master controller 101, this event signal or a separate fully charged battery module message is sent and registered in the register 170 so that the register 170 stores updated information on which of the battery modules are fully charged.

In response to registering the module M1 as fully charged, the master controller 101 may send an instruction to the battery module M1 to disconnect the power terminals from the power bus 125 via switch 104. Furthermore, in response to the disconnect instruction, the slave control unit 106 may ensure that all balancing resistors are released and that battery module M1 enters a standby mode.

Since battery module 1 is disconnected, the charging current 401 is too high for the remaining battery module M2. Accordingly, a reduction of the charging current 401 is needed. This may achieved by configuring each of the slave control units 106 to monitor the battery module charging current flowing into the battery modules via the power terminals. Thus, the battery condition determined by the slave control unit of battery module M1 may indicate a too high charging current if the battery module charging current is greater than a maximum current 201 specified for the battery module M1. The slave control unit of module M1 may send a battery condition indicating the too high charging current to the master controller 101, e.g. via the communication bus 181, and in response the master controller generates a maximum battery module charging current event MaxI indicating that the battery module charging current exceeds the maximum current 201. Alternatively, the slave control unit of a battery module generates the maximum battery module charging current event MaxI in response to determining that the measured charging current exceeds the maximum charging current 201.

In response to the maximum battery module charging current event MaxI, the master controller 101 determines the current control signal 151, e.g. dependent on battery module capacities, according to methods which are equivalent with methods for determining the current control signal 151 in response to the Vmax maximum cell voltage event.

As shown at the first arrow in Fig. 3 with reference names Max. Current, the charging current 401 is decreased, e.g. by 5% of the nominal capacity of the remaining connected modules (here connected module M2), equal to 2.24 A, corresponding to 5% of the remaining total capacity of 1 x 44800 mAh.

However, at the next allowed time 410, the charging current 401, or the fraction of the charging current flowing into module M2 (or flowing into other modules in case two or more battery modules are still connected), is still above the maximum current. Therefore, as shown at the second arrow named "Max. Current", in response to a second generated maximum battery module charging current event MaxI, the charging current 401 is reduced again.

The generation of maximum battery module charging current events MaxI is continued, here a total of four times, until the charging current flowing into battery module M2 is below the maximum charging current. In Fig. 3, the maximum charging current 201 of module M2 is indicated by line 403 and it is seen that after the fourth current decrease, the charging current 401 has decreased below the maximum current level 403.

Now, since the slave control unit 106 of battery module M2 determines that the charging current flowing into the battery module M2 is below the maximum current 201, 403, the charging current is automatically increased at the next allowed time 410 based on the current control signal generated by the master controller 101 since no battery events for reductions in the charging current are generated.

After this increase in the charging current, here a 1% increase, the maximum current 201, 403 of battery module 2 is exceeded again, and another current decrease, here a 5 % decrease, is generated in response.

The multiple battery events Vmax indicated with a total of five errors named M2C7 is due to an out-of-balance error where the M2C7 cell reaches the voltage threshold Vmax five times, but where the balancing resistor is set for the M2C7 cell the first time the voltage threshold Vmax is reached.

Similarly, battery cells M2C4 and M2C2 reaches the voltage threshold Vmax a total of 5 times each.

The curve 404 is a fully charged current level determined as 1/20 of the battery capacity of battery module M2. The charging current decreases below the fully charged current level 404 while battery module M2C2 continues causing generation of Vmax battery events, while battery cells M2C1, M2C3 and M2C6 have not reached the threshold voltage Vmax indicating a fully charged level of the cells.

However, since the average charging current 401 during a given period, here 1000 ms, has been lower than the fully charged current level 404, module M2 is considered fully charged.

Accordingly, a second condition for considering a battery module fully charged is obtained dependent on a comparison of the charging current 401, i.e. the charging current flowing into a given battery module 103, with a current threshold 404, such as a current threshold determined dependent on a battery module capacity of said battery module 103. As illustrated in the specific example, the charging current compared with the current threshold 404, may be determined as a time-averaged charging current obtained over a given period.

Thus, the battery condition here comprises a situation where the average charging current 401 or time-average thereof has been lower than the current level 404 for a given period of time. When this battery condition is fulfilled, the slave control unit 106 generates a fully charged message which is received by the master controller which generates a fully charged battery event Mchar. In response, the master controller generates a current control signal causing a reduction of the charging current similar to the previously described fully charged battery event Mchar. However, if it is the last battery module of the plurality of battery modules which has become fully charged, the master controller may generate a current control signal which sets the charging current to a final low current which may be used for powering the e.g. a controller, while all battery modules are disconnected via the switches 104.

The battery capacity used for determining a fully charged condition when the charging current is below a fraction of the capacity, or used for determining the increases/decreases of the charging current may be the nominal capacity, an actual capacity which may be determined as a function of e.g. charging/discharging cycles, and other measures of the battery.

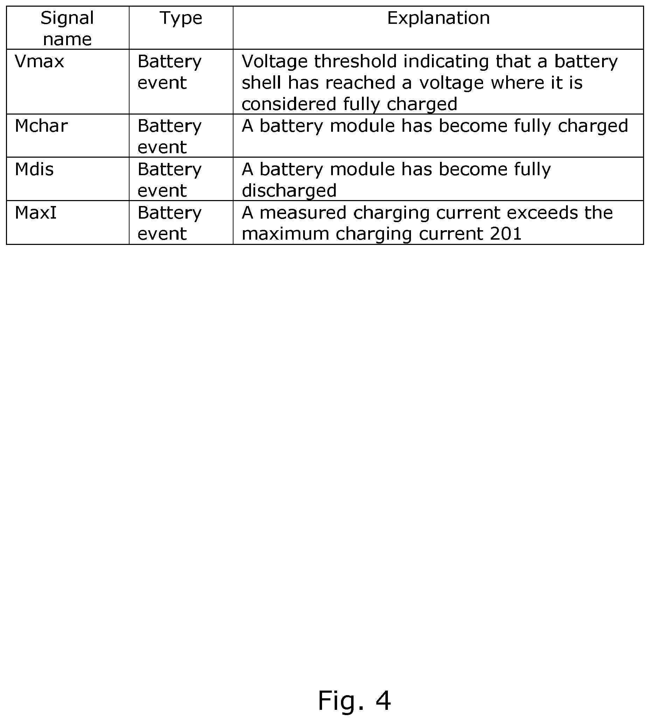

Fig. 4 provides an overview of some battery events. Other events includes overcurrent during charge and discharge, short-circuit during charge and discharge, high temperature during charge, low temperature during charge, over-temperature during charge and discharge, under-temperature during charge and discharge and defect battery module.

During discharging, when one or more of the battery modules are connected to the load 190 via the closed switch 191 and one or more of switches 104. Thus, two or more battery modules may be discharged in parallel. The master controller 106 may update the register 170 during the discharging, e.g. information on the charging status such as when a battery module is fully discharged.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A battery module comprising
- at least one battery cell (105),
- a battery module terminal (122) arranged to detachably connect with a connection arrangement (121), where the connection arrangement (121) is arranged to electrically connect a plurality of the battery modules in parallel to enable parallel charging/discharging via individual switches (104),
- a master controller (101) arranged to determine a current control signal (151) for controlling and adjusting a charging current (401) from a current source (102),
- a slave control unit (106) configured to monitor a battery condition of the battery module, where the slave control unit (106) and/or the master controller (101) is arranged to determine a battery event based on the battery condition, where the master controller is configured to
- determine the current control signal (151) dependent on the battery event so as to cause a reduction or increase of the charging current, and to determine the current control signal dependent on battery module capacities of the one or more battery modules being connected to the current source via the individual switches (104).

2. A battery module according to claim 1, wherein a magnitude of the reduction or the increase of the charging current is determined dependent on the battery module capacities of said one or more battery modules.

3. A battery module according to any of the preceding claims, wherein the master controller is configured to determine the current control signal so as to cause an increase of the charging current only in the absence of the battery event.

4. A battery module according to any of the preceding claims, where the master controller is configured to determine current control signal dependent on a timer signal so that changes of the current control signal is only possible at times given by the timer signal.

5. A battery module according to any of the preceding claims, where the slave controller is configured to determine a fully charged condition (Mchar) of one of the battery modules dependent on a comparison of the charging current with a current threshold or to determine the fully charged condition when all cell voltages of the battery module has reached a maximum voltage.

6. A battery module according to any of the preceding claims, where the battery module comprises one of the switches.

7. A battery module according to any of the preceding claims, wherein the switch is controllable to connect or disconnect the battery module from the current source or a load.

8. A battery system (100) comprising
- a master controller (101) arranged to determine a current control signal for controlling and adjusting a charging current from a current source (102),
- one or more battery modules (103) comprising battery module terminals (122),
- a connection arrangement (121) arranged to electrically connect the one or more battery modules (103) in parallel via the battery module terminals (122) to enable parallel charging/discharging via individual switches (104), where each battery module comprises
- at least one battery cell (105),
- a slave control unit (106) configured to monitor a battery condition of the battery module, where the slave control unit (106) and/or the master controller (101) is arranged to determine a battery event based on the battery condition, and where the master controller is configured to
- determine the current control signal dependent on the battery event from any of the battery modules so as to cause a reduction or increase of the charging current, and to determine the current control signal dependent on battery module capacities of the one or more battery modules being connected to the current source or via the individual switches (104).

9. A battery system according to claim 8, wherein each of the battery modules comprises a digital processor which is configurable to operate as the master controller.

10. A battery system according to any of claims 8-9, wherein the configuration to operate as the master controller is determined dependent on individual data stored by each of the battery modules

11. A battery system according to any of claims 8-10, wherein the battery system comprises a register which stores identification data obtained from each of the battery modules and wherein the master controller is configured to store charging data in the register indicating a fully charged and/or discharge condition of the battery modules.

12. A battery system according to any of claims 8-11, wherein the battery system comprises a communication function (181) arranged to communicate information, such as the battery event, from the slave control unit (106) to the master controller (101) and to communicate the current control signal (151) to the current source.

13. A battery system according to any of claims 8-12, wherein the master controller is configured to request battery modules individually to connect to the current source (102) dependent on battery module voltages obtained from the one or more battery modules, where the battery module voltage is a voltage over the series connected battery cells (105).

14. A battery powered apparatus comprising the battery system (100) of claim 8 and a load (190), where the apparatus is arranged to be powered by the battery system.

15. A battery-charger system (180) comprising the battery system (100) of claim 8 and the current source (102).
